# EUROPEAN PATENT SPECIFICATION

(11) **EP 0 405 899 B1**
(45) Date of publication and mention of the grant of the patent: **24.08.1994**
(21) Application number: 90306949.0
(22) Date of filing: 26.06.1990
(51) Int. Cl.: H04Q 11/04, H04M 11/06

(54) **Communication apparatus**
Kommunikationsgerät
Appareil de communication

(30) Priority: 28.06.1989 JP 163854/89
(43) Date of publication of application: 02.01.1991
(73) Proprietor: CANON KABUSHIKI KAISHA, Tokyo (JP)
(72) Inventor: Abe, Shintaro, Shimomaruko, Ohta-ku, Tokyo (JP)
(74) Representative: Beresford, Keith Denis Lewis

(56) References cited:
- EP-A- 0 313 313
- TELCOM REPORT, 1985, pages 38-43, Berlin, DE; L. LISKE et al.: "Die digitalen Sprachterminals HICOM 211 und HICOM 260"
- IEEE TRANSACTIONS ON CONSUMER ELECTRONICS, vol. CE-31, no. 3, August 1985, pages 311-322, New York, US; F. AMEMIYA et al.: "New services and technologies for digital telephone sets"

## Description

### BACKGROUND OF THE INVENTION

### Field of the Invention

The present invention relates to a communication apparatus to be connected to an integrated services digital (ISDN) network.

### Related Background Art

In a G3 facsimile machine connected to a public network for transmitting an image signal by an analog signal, it is not possible to simultaneously effect communication by a telephone set and facsimile communication. However, in an ISDN network, it is possible to connect a plurality of communication terminals such as telephone sets and facsimile machines to buses, and connect a communication by the telephone set and the facsimile machine.

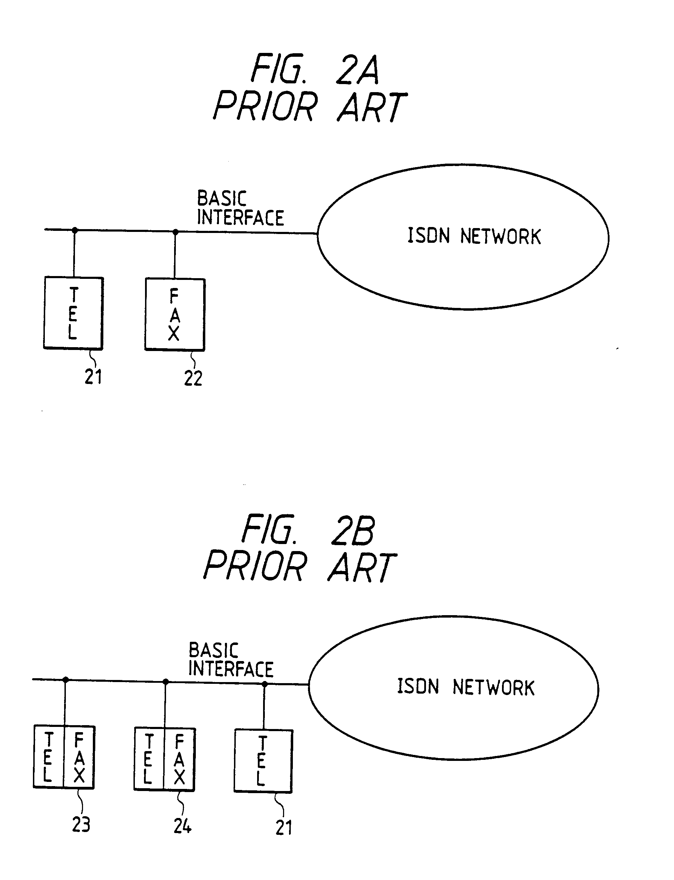

Fig. 2A shows a basic interface of a common ISDN network. Numeral 21 denotes a telephone set and numeral 22 denotes a facsimile machine. In this basic interface, up to eight communication terminals may be connected. In Fig. 2B, a telephone set 21 and facsimile machines 23 and 24 with telephone sets are connected to the basic interface of the ISDN network.

In such a configuration, in many cases, the telephone set and the facsimile machine have the same address. However, at the initial connection stage in the ISDN, there is a step to inform the type of terminal to each other to keep consistency in a communication protocol, and hence it is not permitted to switch from the telephone set to the facsimile machine, as opposed to the G3 facsimile machine. Accordingly, if it is desired to switch to the facsimile machine of the same address during the speech by the telephone set in the ISDN network, it is necessary to hang up the telephone set and then manipulate to connect the line to the facsimile machine. When it is desired to transmit a signal to the facsimile machine during the speech by the telephone set, it is necessary to redial from a sending station and designate the address (number) even if the address of the facsimile machine is the same as that of the telephone set under connection.

Reference is made to EP-A-0313313 which discloses a communication apparatus connectable to an integrated service digital network for achieving a change fo service from one unit to another e.g. from a telephone unit to a facsimile unit, both connected to the same telephone line, without disconnecting a call made through the telephone line.

An object of the present invention is to improve a communication apparatus for an ISDN in order to over come the above problems.

Another object of the present invention is to provide a communication apparatus which permits easy shift from communication by one terminal to communication by other terminal.

According to the invention there is provided a communication system having a speech mode and a data communication mode, comprising: memory means for storing a communication terminal number entered during a first communication connection between communication terminals; instruction means for instructing data communication between communication terminals; and calling means for calling a communication terminal number in response to an instruction by said instruction means, characterised in that said calling means calls to effect a second connection between communication terminals on the basis of the communication terminal number used in the speech mode and stored in said memory means without the necessity of dialling the already used and stored connection terminal number, in the case where the data communication is instructed by said instruction means during the speech mode at the moment the user presses an appropriate data communication start key.

In this manner the shift from a communication status by a communication terminal to data communication by a data terminal is facilitated. The communication apparatus of the present invention may be arranged to call a destination terminal connected to an ISDN network, and if a responding terminal is not a desired one, permits communication with the desired terminal with an easy operation.

The present invention will now be described by way of example with reference to the accompanying drawings in which:-
Fig. 1 shows a block diagram of a facsimile machine in accordance with one embodiment.
Fig. 2A and 2B shown terminal connections in a basic interface of an ISDN network.
Fig. 3 shows a communication protocol between the ISDN network and a calling/called terminal.
Fig. 4 shows a flow chart of a speech process from a telephone set.
Fig. 5 shows a flow chart of a process for interrupting speech and switching to facsimile transmission.
Fig. 6 shows a flow chart of a process of facsimile transmission while continuing the speech.

### DETAILED DESCRIPTION OF THE PREFERRED EMBODIMENTS

One embodiment of the present invention is now explained in detail with reference to the drawings.

In the following embodiment, a facsimile machine is explained, although a communication apparatus which communicates code data such as a telex machine may be connected to the ISDN and the present invention is applicable to any communication apparatus which may be connected to the ISDN.

A configuration of the facsimile machine of the present embodiment is first explained.

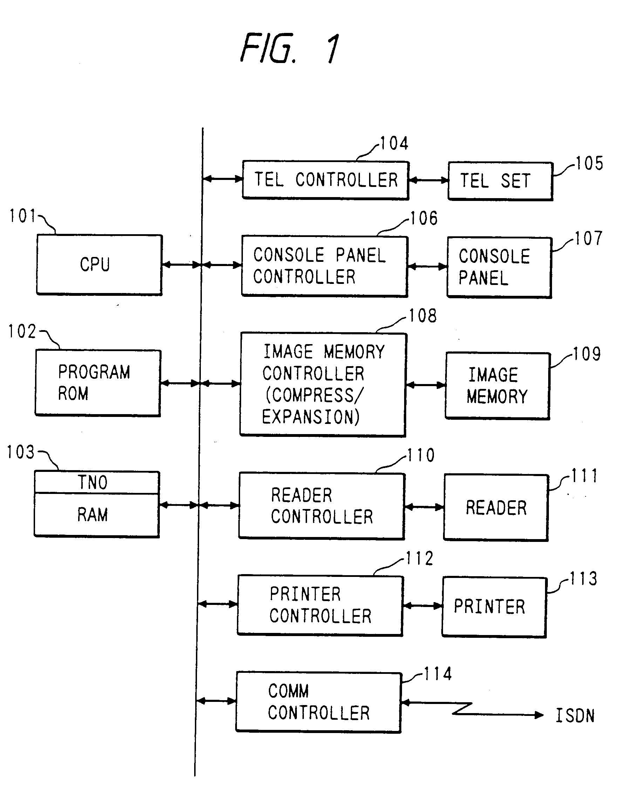

Fig. 1 shows a block diagram of the facsimile machine in the embodiment.

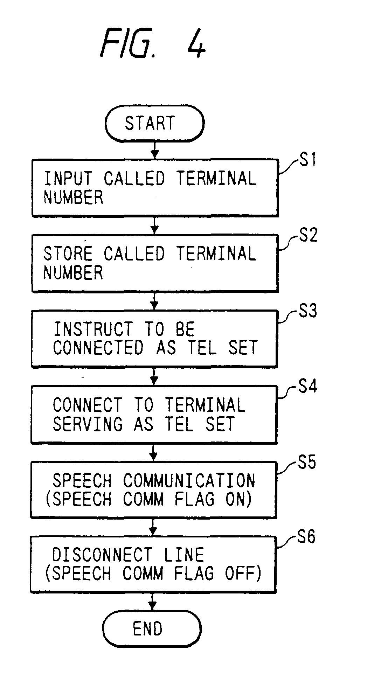

Numeral 101 denotes a CPU such as a micropro- cessorwhich controls an overall system, and numeral 102 denotes a program ROM which stores a control program for the CPU shown in Figs. 4-6 and various data. Numeral 103 denotes a RAM which is used as a work area of the CPU 101 to temporarily store various data and which includes TNO for storing destination station numbers. Numeral 105 denotes a telephone set provided in the facsimile machine, and numeral 104 denotes a telephone controller for controlling the telephone set 105.

Numeral 107 denotes a console panel which has telephone dialing keys, various operation keys and function keys, and a display such as a liquid crystal display or an LED. Numeral 106 denotes a console panel controller for controlling the display of the console panel 107 and processing key entries. Numeral 109 denotes an image memory which stores document image data read by a reader 111 and image data received from the ISDN network. Numeral 108 denotes an image memory controller which has a function (of compression/decompression) of decoding the received MMR-coded image data and MMR-coding the image data read by the reader 111.

Numeral 111 denotes a reader which opto- electrically reads a document image and outputs as a digital signal, and numeral 110 denotes a reader controller for controlling the reader 111. Numeral 113 denotes a printer which forms an image on a record sheet based on the received image data or the image data read by the reader 111. Numeral 112 denotes a printer controller which controls the operation of the printer 113. Numeral 114 denotes a line controller (communication controller) which controls the communication between the facsimile machine and the ISDN network.

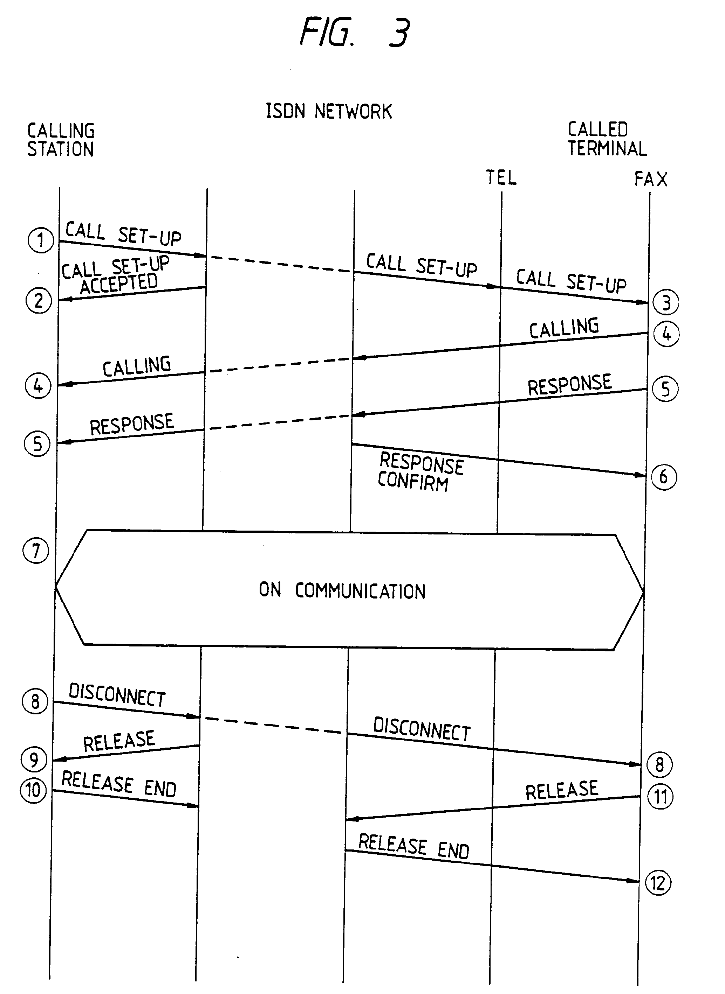

A terminal connection procedure (Fig. 3) in the ISDN is now explained.

Fig. 3 shows a sequence of a basic terminal connection on the ISDN.
1 CALL SET UP is sent from a calling terminal to the ISDN network. The CALL SET UP includes calling/called terminal numbers, transmission capability (BC) and matching confirmation information, and the communication protocol and transmission data matching is made between the calling terminal and the called terminal based on the above information.
2 The ISDN network sends an acceptance message for the CALL SET UP if a channel B is available.
3 The CALL SET UP message is sent to a plurality of terminals on the bus. 4 Each terminal examines the information included in the CALL SET UP, and if it cannot immediately respond, it sends a CALL message to the ISDN network. When the ISDN network received the CALL message, it informs to the calling terminal that the called terminal is calling.
5 Each terminal examines the information included in the CALL SET UP, and if it determines that the communication is permitted, it sends a RESPONSE message to the ISDN network. The RESPONSE message is informed to the calling terminal by the ISDN network. The RESPONSE message indicates that the called terminal is ready for reception and request a communication path.
6 For the RESPONSE message from the called terminal, the ISDN network sends a RESPONSE ACKNOWLEDGE message to the called terminal.
7 Both the calling terminal and the called terminal are in a data transfer phase, and the image data is transmitted and received.
8 When a DISCONNECTION REQUEST message is received from the calling terminal, it is sent to the called terminal by the ISDN network. 9 When a RELEASE message which informs the acceptance of the DISCONNECTION REQUEST is sent back to the calling terminal by the ISDN network, the channel B of the ISDN network is released.
9 When a RELEASE message which informs the acceptance of the DISCONNECTION REQUEST is sent to the ISDN network from the called terminal, the release of the call number of the called terminal is informed to the ISDN network.
10 12 END OF RELEASE messages from the calling terminal and the ISDN network for the RELEASE message.

A speech operation by the telephone set is now explained.

Fig. 4 shows a flow chart of a call operation in a telephone set (including a telephone set provided in a facsimile machine) connected the ISDN network.

In a step S1, a terminal number of a called terminal is entered by the console panel 107. In a step S2, the terminal number is stored in the TNO of the RAM 103. In a step S3, an instruction to connect as a telephone set is issued from the console panel 107. In a step S4, the CALL SET UP is issued to supply the called terminal number and the matching confirmation information to the called terminal (ISDN network). Thus, a terminal which is ready for communication responds and the calling terminals and the called terminal are connected through the procedures 1 to 6 shown in Fig. 3.

In a step S5, the speech by the telephone set 105 is effected between the calling terminal and the called terminals and a speech flag (not shown) in the RAM 103 is set. In a step S6, the speech flag is reset when the speech is over and the telephone set is hooked on, and the line is disconnected through the procedures t - ¹⁰ of Fig. 3.

A facsimile transmission operation is now explained.

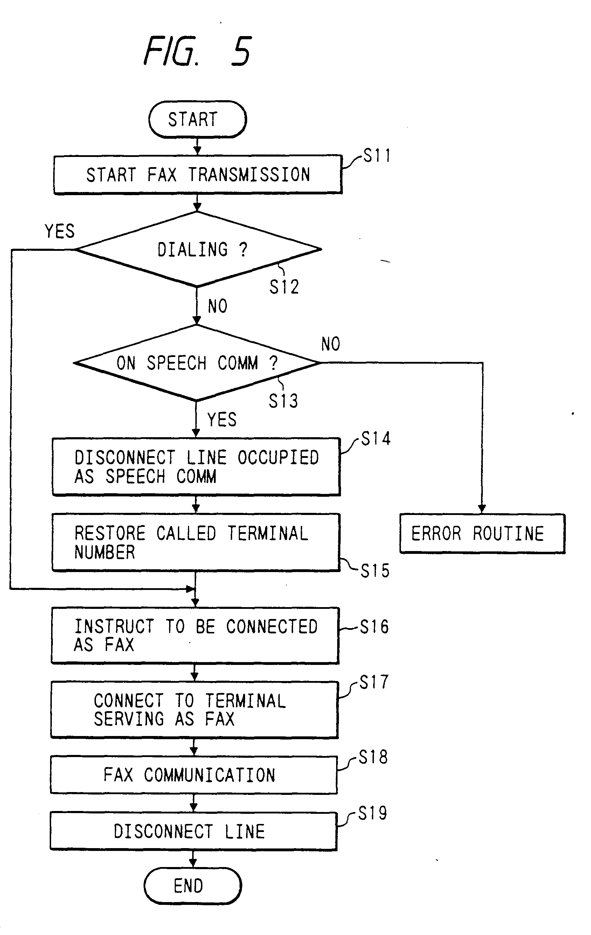

Fig. 5 shows a flow chart of a facsimile transmission process in the facsimile machine of the embodiment. In a step S11, the facsimile transmission is instructed by the console panel 107. In a step S12, the entry of the destination terminal telephone number by dialing is checked. If it has been entered, the process proceeds to a step S16, and if it has not been entered, the process proceeds to a step S13 to check whether it is busy or not, based on the speech flag. If it is not busy, an error processing routine is started. If it is busy, the process proceeds to a step S14 to disconnect the line through the procedures 8-10 of Fig. 3.

In a step S15, the called terminal number stored in the step S2 of Fig. 4 is read. In a step S16, a CALL SET UP message is sent to the destination terminal by the communication controller 114 based on the called terminal number read in the step S15 or the number entered in the step S12. Thus, a terminal which is ready for the facsimile communication responds. In a step S17, it is connected with the called facsimile machine. In step S18, the facsimile communication is effected, and when the communication is over, the line is disconnected through the procedures @ - @ of Fig. 3 and the process is terminated.

In the facsimile machine of the present embodiment, when it is desired to send a facsimile message to the terminal under speech, it is only necessary to instruct the facsimile transmission and not necessary to redial in order to send the facsimile message to the terminal under speech.

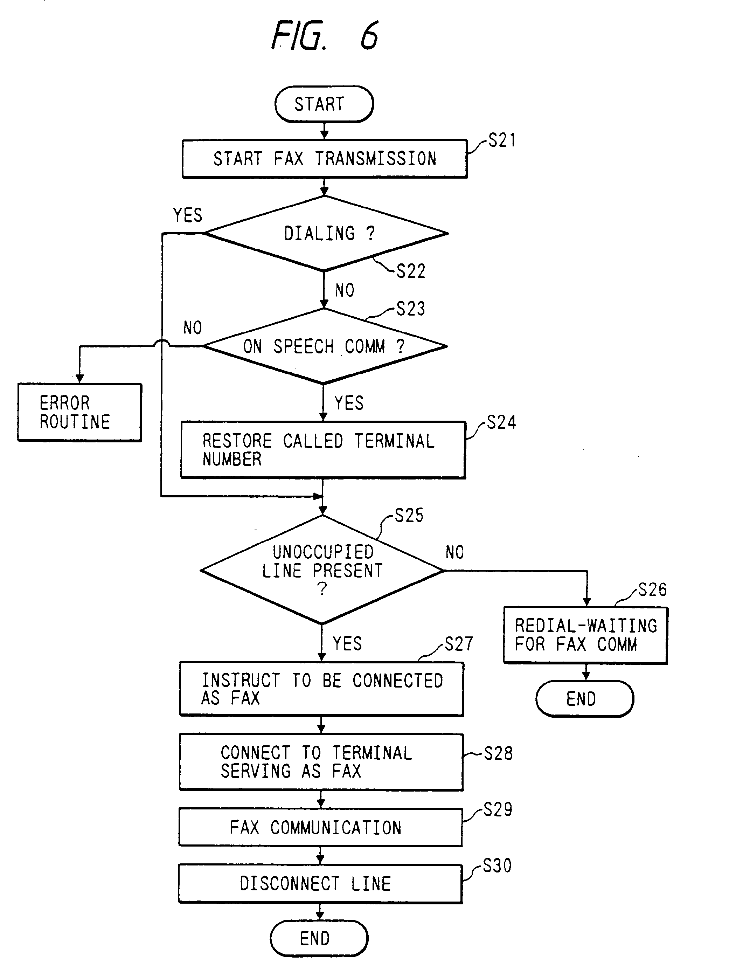

Fig. 6 shows a flow chart of another facsimile transmission process in the facsimile apparatus of the present embodiment. In this case, the speech and the facsimile transmission are effected paralelly.

In a step S21, the facsimile transmission is instructed by the console panel 107. In a step S22, the entry of the destination telephone number by dialing is checked. If it has been entered, the process proceeds to a step S25, and if it has not been entered, the process proceeds to a step S23 to check if the speech is in progress, based on the speech flag. If it is not on speech, an error process routine is started. If it is on speech, the process proceeds to a step S24 to read the called terminal number stored in the step S2 of Fig. 4 from the TNO of the RAM 103. In a step S25, whether there is a vacant channel in the communication channel of the ISDN network or not is checked. If there is no vacant channel, the process proceeds to a step S26 to monitor redialing for the facsimile communication.

If there is a vacant channel in the step S25, the process proceeds to a step S27 to send a CALL SET UP message to the destination terminal through the communication controller 114, based on the called terminal number read in the step S24 or the number entered in the step S22. Thus a terminal which is ready for facsimile communication responds. In a step S28, it is connected to the called facsimile machine. In a step S29, the facsimile communication is effected. When the communication is over, the process proceeds to a step S30 to disconnect the line through the procedures 8-10 of Fig. 3. Then, the process is terminated.

In accordance with the facsimile machine of the present embodiment, when the facsimile transmission to the terminal under speech is desired, it is only necessary to instruct the facsimile transmission and not necessary to redial, and the facsimile transmission while speaking is attained.

As explained above, the shift from the speech mode by the telephone set to the communication by the facsimile machine is easily attained.

Further during the speech by the telephone set, the facsimile transmission to the facsimile machine at the same address is attained without redialing.

## Claims

1. A communication system having a speech mode and a data communication mode, comprising:
memory means (103) for storing a communication terminal number entered during a first communication connection between communication terminals;
instruction means (101) for instructing data communication between communication terminals; and
calling means (114) for calling a communication terminal number in response to an instruction by said instruction means,
characterised in that said calling means (114) calls to effect a second connection between communication terminals on the basis of the communication terminal number used in the speech mode and stored in said memory means without the necessity of dialling the already used and stored connection terminal number, in the case where the data communication is instructed by said instruction means during the speech mode at the moment the user presses an appropriate data communication start key.

2. A system according to claim 1, characterised in that said calling means (114) is adapted to transmit a calling signal including the communication terminal number and data representing the data communication mode.

3. A system according to claim 1 or 2, characterised in that said calling means comprises discriminating means (513) for discriminating whether the apparatus is in the speech mode or not.

4. A system according to claim 2 or 3, characterised in that said calling means disconnects a connection with the communication terminal in the speech mode in response to the instruction by said instruction means.

5. A system according to any one of claims 1-4, characterised in that said calling means searches for an unoccupied channel and specifies the unoccupied channel for the data communication mode.

6. A system according to any one of claims 1-5, characterised in that said calling means is adapted to call another communication terminal in the case where another communication terminal number has been newly inputted until said data communication is instructed by said instruction means.

7. A system according to claim 5 or 6, characterised in that said calling means is adapted to monitor redialing when there is no unoccupied channel available.

8. A system according to any one of claims 1-7, characterised in that the data communication is conducted while the speech is maintained.

9. A system as claimed in any one of claims 1-8, characterised in that there is provided a console unit including a manual switch for instructing data communication in the speech mode,
said calling means serving to call the communication terminal member stored in said memory by said communication unit in response to the data communication instruction from said console unit.

10. A system as claimed in any one of claims 1-9, characterised in that said calling means disconnects the speech mode in response to an instruction from said instruction means and calling based on the communication terminal number stored in said memory means.

## Patentansprüche

1. Kommunikationsanlage mit einer Sprachbetriebsart und einer Datenübertragungsbetriebsarts umfassend
eine Speichereinrichtung (103) zum Speichern einer während einer ersten Übertragungsverbindung eingegebenen Übertragungsanschlußnummer,
eine Befehlseinrichtung (101) zum Befehlen einer Datenüber tragung zwischen Datenübertragungsanschlüssen, und
einer Rufeinrichtung (114) zum Rufen einer Übertragungsanschlußnummer in Abhängigkeit von einem Befehl der Befehlseinrichtung,
dadurch gekennzeichnet, daß
die Rufeinrichtung (114) in dem Fall, in dem in der Sprachbetriebsart die Datenübertragung durch die Befehlseinrichtung zum Zeitpunkt des Drückens einer geeigneten Datenübertragungs-Auslösetaste durch den Benutzer befohlen wird, einen Ruf ausführt zum Bewirken einer zweiten Verbindung zwischen Übertragungsanschlüssen auf der Grundlage der in der Sprachbetriebsart verwendeten und in der Speichereinrichtung gespeicherten Übertragungsanschlußnummer, ohne daß das Wählen der bereits benutzten und gespeicherten Übertragungsanschlußnummer erforderlich ist.

2. Anlage nach Anspruch 1, dadurch gekennzeichnet, daß mit der Rufeinrichtung (114) ein Rufsignal übertragbar ist, das die Übertragungsanschlußnummer und die Datenübertragungsbetriebsart darstellende Daten beinhaltet.

3. Anlage nach Anspruch 1 oder 2, dadurch gekennzeichnet, daß die Rufeinrichtung eine Unterscheidungseinrichtung (513) zum Unterscheiden, ob das Gerät in der Sprachbetriebsart ist oder nicht, umfaßt.

4. Anlage nach Anspruch 2 oder 3, dadurch gekennzeichnet, daß die Rufeinrichtung in der Sprachbetriebsart eine Verbindung mit dem Übertragungsanschluß in Abhängigkeit von dem Befehl der Befehlseinrichtung unterbricht.

5. Anlage nach einem der Ansprüche 1 bis 4, dadurch gekennzeichnet, daß die Rufeinrichtung nach einem unbelegten Kanal sucht und den unbelegten Kanal für die Datenübertragungsbetriebsart bestimmt.

6. Anlage nach einem der Ansprüche 1 bis 5, dadurch gekennzeichnet, daß mit der Rufeinrichtung in dem Fall, in dem eine andere Übertragungsanschlußnummer neu eingegeben wurde, bis zum Befehlen der Datenübertragungsbetriebsart durch die Befehlseinrichtung ein anderer Übertragungsanschluß rufbar ist.

7. Anlage nach Anspruch 5 oder6, dadurch gekennzeichnet, daß mit der Rufeinrichtung die Wahlwiederholung überwachbar ist, wenn kein unbelegter Kanal verfügbar ist.

8. Anlage nach einem der Ansprüche 1 bis 7, dadurch gekennzeichnet, daß die Datenübertragung durchgeführt wird, während die Sprache aufrechterhalten wird.

9. Anlage nach einem der Ansprüche 1 bis 8, dadurch gekennzeichnet, daß eine Bedieneinheit vorgesehen ist, die einen manuellen Schalter zum Befehlen einer Datenübertragung in der Sprachbetriebsart aufweist, und die Rufeinrichtung dazu dient, den in der Speichereinrichtung gespeicherten Übertragungsanschluß-Teilnehmer in Abhängigkeit von dem Datenübertragungsbefehl der Bedieneinheit zu rufen.

10. Anlage nach einem der Ansprüche 1 bis 9, dadurch gekennzeichnet, daß die Rufeinrichtung die Sprachbetriebsart in Abhängigkeit von einem Befehl der Befehlseinrichtung unterbricht und auf der Grundlage der in der Speichereinrichtung gespeicherten Übertragungsanschlußnummer ruft.

## Revendications

1. Un système de télécommunication ayant un mode de parole et un mode de transmission de données, comprenant :
des moyens de mémoire (103) pour enregistrer un numéro de terminal de télécommunication qui est introduit pendant une première connexion de télécommunication entre des terminaux de télécommunication ;
des moyens de génération d'instructions (101) pour demander une transmission de données entre des terminaux de télécommunication ; et
des moyens d'appel (114) pour appeler un numéro de terminal de télécommunication sous l'effet d'une instruction provenant des moyens de génération d'instructions,
caractérisé en ce que les moyens d'appel (114) effectuent un appel pour établir une seconde connexion entre des terminaux de télécommunication sur la base du numéro de terminal de télécommunication qui est utilisé dans le mode de parole et qui est enregistré dans les moyens de mémoire, sans la nécessité de composer le numéro de terminal de communication déjà utilisé et enregistré, dans le cas où la transmission de données est demandée par les moyens de génération d'instructions pendant le mode de parole, au moment où l'utilisateur appuie sur une touche de début de transmission de données appropriée.

2. Un système selon la revendication 1, caractérisé en ce que les moyens d'appel (114) sont conçus pour émettre un signal d'appel contenant le numéro de terminal de télécommunication et des données représentant le mode de transmission de données.

3. Un système selon la revendication 1 ou 2, caractérisé en ce que les moyens d'appel comprennent des moyens de discrimination (513) pour déterminer si l'appareil est dans le mode de parole ou non.

4. Un système selon la revendication 2 ou 3, caractérisé en ce que les moyens d'appel déconnectent une connexion avec le terminal de télécommunication dans le mode de parole, sous l'effet de l'instruction provenant des moyens de génération d'instructions.

5. Un système selon l'une quelconque des revendications 1-4, caractérisé en ce que les moyens d'appel recherchent un canal inoccupé et ils spécifient le canal inoccupé pour le mode de transmission de données.

6. Un système selon l'une quelconque des revendications 1-5, caractérisé en ce que les moyens d'appel sont conçus pour appeler un autre terminal de télécommunication dans le cas où un autre numéro de terminal de télécommunication a été nouvellement introduit, avant que la transmission de données ne soit demandée par les moyens de génération d'instructions.

7. Un système selon la revendication 5 ou 6, caractérisé en ce que les moyens d'appel sont conçus pour contrôler une nouvelle opération de numérotation lorsqu'il n'y a pas de canal inoccupé disponible.

8. Un système selon l'une quelconque des revendications 1-7, caractérisé en ce que la transmission de données est effectuée pendant que la parole est maintenue.

9. Un système selon l'une quelconque des revendications 1-8, caractérisé par l'existence d'une console comprenant un commutateur manuel pour demander une transmission de données dans le mode de parole,
les moyens d'appel ayant pour fonction d'appeler le numéro de terminal de télécommunication qui est enregistré dans les moyens de mémoire par l'unité de télécommunication, sous la dépendance de l'instruction de transmission de données provenant de la console.

10. Un système selon l'une quelconque des revendications 1-9, caractérisé en ce que les moyens d'appel sont conçus pour désactiver le mode de parole sous l'effet d'une instruction provenant des moyens de génération d'instructions, et pour effectuer un appel sur la base du numéro de terminai de télécommunication qui est enregistré dans les moyens de mémoire.
